# EUROPEAN PATENT SPECIFICATION

(11) **EP 2 317 296 B1**
(45) Date of publication and mention of the grant of the patent: **31.10.2012**
(21) Application number: 10000141.1
(22) Date of filing: 11.01.2010
(51) Int. Cl.: G01L 5/06

(54) **Load cell with clamp device**
Kraftmesszelle mit Klammervorrichtung
Cellule de charge dotée d'un dispositif de serrage

(30) Priority: 28.10.2009 ES 200902052
(43) Date of publication of application: 04.05.2011
(73) Proprietor: Dinacell Electronica, S.L., 28529 Rivas Vaciamadrid (ES)
(72) Inventor: Gonzalez Gallegos, Rafael, 28529 Rivas Vaciamadrid (ES)
(74) Representative: Pérez Gómez de Zamora, Carlos

(56) References cited:
- EP-A1- 0 802 404
- GB-A- 2 063 494
- GB-A- 2 173 005

## Description

### OBJECT OF THE INVENTION

The invention, as expressed in the formulation of the present specification, refers to a load cell with clamp device, thus adding to the primary function several advantages and innovative characteristics, as well as other that are inherent to its composition and organization, and which will be described in detail in what follows, and providing an improvement when compared to similar systems in contemporary technology when dealing with similar problems. More in particular, the object of the present invention revolves around the concept of load cell, such as is usually designed for the purpose of measuring mechanical tension in wires, and which is endowed with a clamp that holds together the different movable wire-adjusting pieces, and making the installation easier while at the same time avoiding external elements, which in turn prevents their eventual loss.

### SCOPE OF THE INVENTION

The scope of applicability of the present invention must be limited to the technical sector of engineering, in particular the field of industry dedicated to the manufacturing of tension-measuring devices in elevator wires or similar installations.

### BACKGROUND OF THE INVENTION

As of today, and concerning the present status of technology, it must be pointed out that, notwithstanding the fact that the use of so-called load cells for the measuring of mechanical tension in wires is widely used and well known, to the best of our knowledge, there is not one single instance of such element with either technical and structural characteristics or constituent elements similar to those defining the mechanism hereby defined. In this concern, we must stress that there exists one element at least, manufactured under the German brand HENNING, consisting of a load cell with a clamp endowed with a tension sensor. Such element, even though it complies with the intended function with a certain degree of efficiency, presents us with several problems that clearly suggest a need for improvement, as they are liable to cause certain inconveniences.

More in particular, the assembly means of the clamp with respect to the cell's body are external to the latter, resulting in an obvious liability to be lost or damaged.

In addition, the cell's body is not endowed with any specific space adapted for the emplacement of the clamp, as the latter is attached to the cell only by means of a screw, leaving the mobile part of it, i.e. the rivet that holds it by both ends, open around the wire area, this situation resulting in undesirable spurious motions in this element. Consequently, it would be clearly desirable to have at our disposal a cell endowed with a clamp device that prevents the shortcomings previously described, and this is precisely the essential objective that the present invention envisions.

A similar load sensing devices for ropes and cables comprising a clamp is disclosed in the application BG 2 063 494.

### EXPLANATION OF THE INVENTION

Thus, the load cell with clamp device that the present invention proposes presents itself as a remarkable innovation within its field of applicability, and its total implementation will no doubt result in an fittingly satisfactory solution to the aforementioned problems, all the characterizing details that make it possible being properly itemized in the final claims that complement the present description.
In a thorough description, this invention proposes the design of a load cell made up of an elongated cell body within which the microprocessor electronics is implemented, while at the same time both ends of one of its bigger sides are endowed with slits, meant to hold the wire in them. It also has a clamp in order to hold the wire in between such slits.
It has the particularity that the elongated body that makes up the cell is endowed with a level lowering or channeling in order to anchor the clamp to it which, in turn, holds itself to the former by means of a bushing acting as a rivet in such a way that the channeling acts as a guide and prevents movements in the clamp. This lowering or channeling in the cell's body, not found in any other cell of this type that can be found on the market, has been built in a way that prevents any influence in the measurement of the wire's tension.
At the same time, the aforementioned bushing that, as we said, acts as a rivet, is attached to the clamp by pressure with a double clip in the shape of a conic frustrum, of which it is endowed at its ends, making up the screw that holds the structure to the body of the cell and its operation serves as a means to increase the pressure of the wire on the body of the cell, thus providing a means for measuring the tension on it, and the screw being embedded in the bushing, in a way that precludes any external elements, that could be lost or damaged.
Such screw should preferably be of the Allen^{®} type and would be accessible only by means of the corresponding wrench. The so-described load cell with a clamp device represents an innovative structure with structural and constituent characteristics unknown so far to that end. This, in conjunction with its practical utility, gives the invention a reason enough to claim the exclusive right that we claim here.

### DESCRIPTION OF THE DRAWINGS

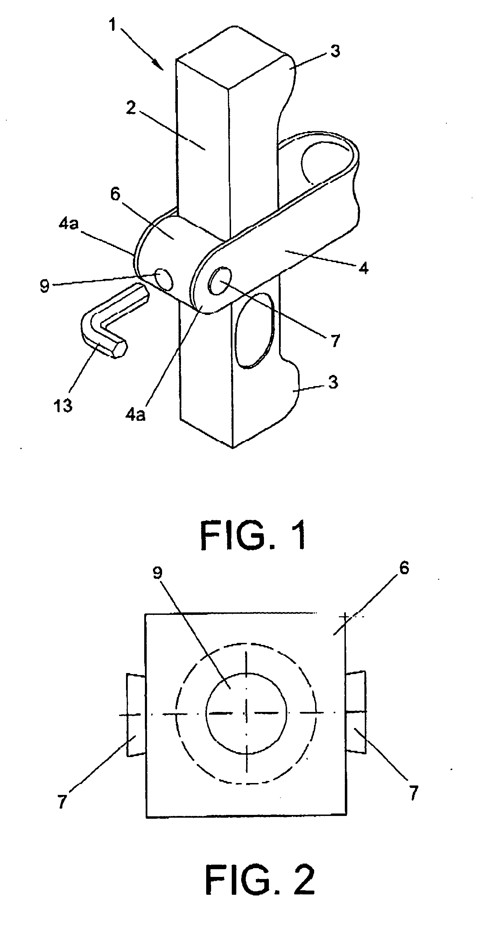

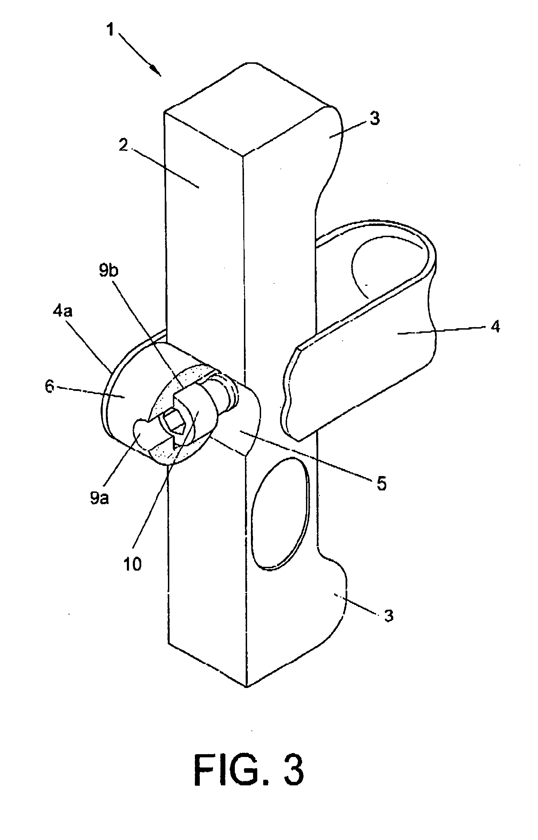

In order to complement the present description and to help a better understanding of the characteristics of the invention thereby described, we provide here as an integral part of the description, a set of blueprints in which, with an illustrative character only and by no means trying to fix it final features, the following is represented:
Figure number 1 shows a perspective view of an example of implementation of the load cell with clamp device, which is the object of the present invention, and in which it the main parts and defining elements can be seen, as well as its settings and external disposition.
Figure number 2 shows a detailed longitudinal section of the bushing that holds open the ends of the clamp, and the clips in the shape of conic frustrum can be seen. These allow the placement by means of pressure.
Figure number 3 shows a similar view to that of figure 1, in which the bushing is represented holding the clamp in a partial section, in such a way that the integration in its interior of the holding screw can be appreciated.
Figure number 4 shows a section view, following a vertical cross section, of the whole set of cell body, bushing and screw.
   The mutual coupling of such elements can also be appreciated.

### PREFERENTIAL IMPLEMENTATION OF THE INVENTION

In view of the aforementioned figures, and according to the numbering adopted, an example of preferential implementation of this invention can be seen. Such implementation comprises the parts and elements indicated in detail in what follows.
Thus, as can be appreciated in the figures, the particular load cell is a device (1) set up from a body (2) of elongated shape, in which interior the microprocessor electronics destined to measure the wire tension is installed. Such body (2) is endowed in both ends of one of its bigger sides with raised up channelings (3) in order to hold and guide the wire, there being a clamp (4) so as to hold that wire at the central portion of the body (2) to the cell in between such raised up channelings (3).
This elongated body (2), which is placed at the opposite side with respect to the one that has the aforementioned raised up channelings (3), and at its central portion, presents a lowered channeling (5) with dimensions suitable to hold a bushing (6) that, in the way of a rivet, holds the open ends (4a) of the clamp (4), in such a way as to allow this lowering to serve as a guide and prevent motion of the aforementioned clamp.

The coupling between the bushing (6) and the clamp (4) is achieved by pressure with the help of both conic-frustrum-shaped clips (7) with which the bushing (6) is provided at its ends when it penetrates the orifices (8) that exist for this use at the clamp's (4) open ends (4a).

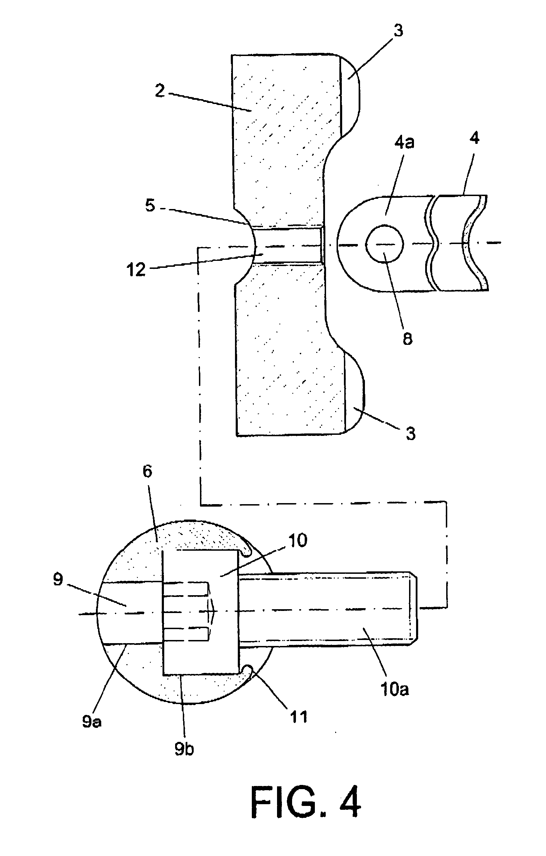

This pressure system facilitates the assembly of the device.
At the same time, the bushing (6) presents a through-bore (9), narrower at the entrance (9a) and wider at the exit (9b), that goes across it transversally, and whose function is to hold in the screw (10) that it has in its interior and allows to fix the bushing (6) to the body (2), serving as a means to press on the body of the cell, and so making possible to measure the tension in it.
To that effect, and such as can be appreciated in figure 4, the final, exit end (9b) of the bushing's through-bore (9) presents a (6) ledge (11), the function of which is to hold in position the screw's head (10) the latter remaining in its entirety embedded in the bushing (6). Preferably, the screw (10) has to be of the Allen® type, and remains accessible to its operation by means of the corresponding wrench (13) through the entry (9a) of the through-bore (9) of the bushing (6).

The thread (10) of the screw (10a) has to be inserted at the hollow (12) passing through the body of the cell (2) at the central portion if that end is to be achieved 5, and on top of it is where the aforementioned lowered channeling (5) is placed, in which the coupling bushing (6) of the clamp (4) is verified. To summarize, the tension-measuring load cell is a device designed to measure mechanical tensions on wires of the kind that is configured from an elongated body (2) in which interior the micro-processed wire-tension-measuring electronics is contained, being such body (2) endowed in both ends of one of its bigger sides with a set of raised up channellings to (3) both hold and guide the wire. Such wire is kept in position by means of a bushing (4) which in turn is fixed to the body (2) by means of a screw (10). By operating this screw, we regulate the pressure exerted on the cell body, thus allowing the measuring of the tension on it. The precise innovative character of this cell body (2) has on the opposite side to the one having the raised up channellings (3), and on its central area, a lowered channel (5) whose dimensions are set so as to fit a bushing (6) which, in the way of a rivet, holds the open ends (4a) of the clamp (4), and being embedded and hidden within such bushing (6). The screw'(10) threaded end (10a) is inserted in the hollow (12) that goes through the body (2) of the cell on its central area, and on it is where the aforementioned lowered channelling is placed (5) That is where the clamp's (4) bushing (6) is placed. Once we have described with enough precision the nature of the present invention, as well as the way to implement it, we do not think further explanations are necessary for a trained expert professional to understand the scope and benefits deriving from this invention, and we take the opportunity to point out that the same essential function can be achieved in a similar manner in a number of slightly different ways which must be considered equivalent to the particular implementation that we are showing here just as an example. The legal protection that we request here should be granted as long as the fundamental principles on which the invention operates are essentially the same.

## Claims

1. LOAD CELL WITH CLAMP DEVICE comprising a cell body (2) of elongated shape, in which interior the tension-measuring micro-processed electronics is incorporated said body (2) being in turn endowed on both its ends of its bigger side with raised up channellings (3) through which a wire goes, and with a clamp (4) that holds the wire in place and which is in turn held to the body (2) by means of a screw (10) which is in contact with the wire, **characterized by** that the elongated body (2), on the opposite side to the wire and on its central area, presents a lowered channeling (5) whose dimensions are adequate to hold a bushing (6) which holds in place the open ends (4a) of the clamp (4), and in the interior of such bushing there is, embedded and hidden within it, the screw (10) whose threaded end (10a) is inserted in the hollow (12) going through the cell body (2) on its central area, and on top of which the aforementioned lowered channeling (5) is placed (5) and to which the bushing (6) of the clamp (4) is coupled.

2. LOAD CELL WITH CLAMP DEVICE, according claim 1, **characterized by** that for the holding together between bushing (6) and the clamp (4), regulated by pressure, a pair of conic-frustrum clips (7) is provided on both ends of the bushing (6) capable of penetrating the orifices (8) provided to such effect at the open ends (4a) of the clamp (4).

3. LOAD CELL WITH CLAMP DEVICE, according claim 1, **characterized by** that in order to hold the screw (10), the bushing (6) presents a through-bore (9), narrower at its entrance (9a) and wider at its exit (9b), that goes through its length in a transversal direction, and destined to hold such screw (10), presenting at the final exit end (9b) of the through-bore (9) a ledge (11) that holds in place the head of such screw (10).

4. LOAD CELL WITH CLAMP DEVICE, according claim 3, **characterized by** that the screw (10) is a socket screw, being accessible by means of the corresponding wrench (13) through the entrance (9a) of the bushing's (6) through-bore.

## Patentansprüche

1. KRAFTMESSZELLE MIT KLAMMERVORRICHTUNG, die aus einem Zellkörper (2) in gestreckter Konfiguration besteht, worin sich die Mikroprozessor-Licktronik befindet, wobei dieser Körper (2) an den beiden Enden auf einer seiner größeren Seite über erhabene Kanäle (3) verfügt, durch die das Kabel verläufe, und über eine Klammer (4), die dieses Kabel hält, und die wiederum am Körper (2) mit einer Schraube (10) befestigt ist, die Kontakt mit dem Kabel hat, **dadurch gekennzeichnet, dass** der gestreckte Körper (2) auf der gegenüber liegenden Seite des Kabels im mittleren Bereich eine kanalförmige Aussparung (5) mit den geeigneten Abmessungen zur Aufnahme einer Buchse (6) aufweist, die die offenen Enden (4a) der Klammer (4) hält, wobei im Innern dieser Buchse (6) die Schraube (10) eingebettet und versteckt ist, und wobei der Gewindeabschnitt (10a) dieser Schraube (10) in einer Öffnung (12) sitzt, die im mittleren Bereich durch den Körper (2) verläuft, und worüber sich die hanalförmige Aussparung (5) befindet, worin die Buchse (6) der Klammer (4) angeschlossen wird.

2. KRAFTMESSZELLE MIT KLAMMERVORRICHTUNG, gemäß Anspruch 1, **dadurch gekennzeichnet, dass** zum Zusammenhalten der Buchse (6) und der Klammer (4) kegelstumpfförmige Clips (7) an den Enden der Buchse (6) vorhanden sind, die in die Öffnungen (8) an den offenen enden (4a) der Klammer (4) eingreifen.

3. KRAFTMESSZELLE MIT KLAMMERVORRICHTUNG, gemäß Anspruch 1, **dadurch gekennzeichnet, dass** zum Lösen der Schraube (10) in der Buchse (6) eine am Eingang engere (9a) und am Ausgang breitere (9b) Durcheangsbohrung (9) vorhanden ist, die die Buchse in Querrichtung durchquert und zur Aufnahme dieser Schraube (10) dient, und auf der Ausgangsseite (9b) der Durchgangsbohrung (9) ein Rand (11) vorgesehen ist, der den Kopf dieser Schraube (10) hält.,

4. KRAFTMESSZELLE MIT KLAMMERVORRICHTUNG, gemäß Anspruch 3, **dadurch gekennzeichnet, dass** es sich bei der Schraube (10) um eine Hohlkopfschraube handelt, die mit dem entsprechenden Schlüssel (13) durch den Eingang (9a) der Buchse (6) der Durchgangsbohrung zu erreichen ist.

## Revendications

1. CELLULE DE CHARGE DOTEE D' UN DISPOSITIF DE SERRAGE, comprenant un corps (2) de cellule de forme allongée, dans lequel est incorporé le système électronique micro-traité de mesure de tension, ledit corps (2) étant doté, aux deux extrémités de son côté le plus grand, de canaux élevés (3) par lesquels passe un câble, et d'une bride (4) qui soutient le câble et qui est elle attachée au corps (2) par une vis (10) qui est en contact avec le câble, **caractérisée en ce que** le corps (2) allongé, sur le côté opposé au câble et sur sa partie centrale, présente un canal abaissé (5) dont les dimensions permettent d' accueillir une douille (6) qui soutient les extrémités ouvertes (4a) de la bride (4), ladite douille (6) intégrant et cachant en son intérieur la vis (10), l' extrémité filetée (10a) de ladite vis (10) étant insérée dans un trou (12) qui traverse le corps (2) de cellule dans sa partie centrale, et sur lequel est placé ledit canal abaissé (5) et auquel est accouplée la douille (6) de la bride (4).

2. CELLULE DE CHARGE DOTEE D' UN DISPOSITIF DE SERRAGE, selon la revendication 1, **caractérisée en ce que** pour la fixation de la douille (6) et de la bride (4), régulée par pression, sont incorporés des clips troncs-coniques (7) aux deux extrémités de la douille (6) capables de pénétrer dans les orifices (8) prévus à cet effet aux extrémités ouvertes (4a) de la bride (4).

3. CELLULE DE CHARGE DOTEE D' UN DISPOSITIF DE SERRAGE, selon la revendication 1, **caractérisée en ce que**, pour maintenir la vis (10), la douille (6) présente un trou passant (9), avec une entrée (9a) plus étroite et une sortie (9b) plus large, qui la traverse transversalement, destiné à maintenir ladite vis (10), un rebord (11) étant présent à l' extrémité finale de sortie (9b) du trou passant (9) pour retenir la tête de ladite vis (10).

4. CELLULE DE CHARGE DOTEE D' UN DISPOSITIF DE SERRAGE, selon la revendication 3, **caractérisée en ce que** la vis (10) est une vis à tête creuse, accessible via la clé correspondante (13) à travers l'entrée (9a) du trou passant de la douille (6).
